# EUROPEAN PATENT APPLICATION

(11) **EP 4 616 776 A1**
(43) Date of publication of application: **17.09.2025**
(21) Application number: 23893680.1
(22) Date of filing: 14.11.2023
(51) Int. Cl.: A47L 11/40, A47L 11/24, G06V 20/80

(54) **CLEANING DEVICE CONTROL METHOD AND APPARATUS, MEDIUM, AND ELECTRONIC DEVICE**

(30) Priority: 25.11.2022 CN 202211493648
(71) Applicant: Beijing Roborock Innovation Technology Co., Ltd., Beijing 102206 (CN)
(72) Inventor: LIU, Qing, Beijing 102206 (CN); NIU, Yansheng, Beijing 102206 (CN); CONG, Yiming, Beijing 102206 (CN); LI, Yuxuan, Beijing 102206 (CN)
(74) Representative: Manitz Finsterwald Patent- und Rechtsanwaltspartnerschaft mbB
(86) International application number: PCT/CN2023/131523
(87) International publication number: WO 2024/109590

(57) **Abstract**

The present invention provides a cleaning device control method, a cleaning device control apparatus, a computer readable storage medium, and an electronic device. The method comprises: acquiring a laying direction of a ground laying material, wherein the laying direction is the direction in which the longest symmetry axis of the ground laying material is located; determining a cleaning direction of a cleaning device according to the laying direction; and controlling the cleaning device to clean in the cleaning direction. According to the method, the cleaning direction can be set according to the actual situation of the ground laying material.

## Description

### CROSS-REFERENCE TO RELATED APPLICATION

The present application claims priority to the Chinese patent application No. 202211493648.8 filed on November 25, 2022, and the entire contents of this Chinese patent application are incorporated herein by reference.

### TECHNICAL FIELD

The present disclosure relates to the field of smart homes, and in particular, relates to a method and apparatus for controlling a cleaning device, a computer-readable storage medium and an electronic device.

### BACKGROUND ART

In recent years, with the rapid development of computer technologies and artificial intelligence science, the intelligent robot technology has gradually become a hot spot in the field of modern robot research. As the most practical type of intelligent robots, cleaning robots can automatically complete the cleaning work of a floor with a certain degree of artificial intelligence.

At present, in a cleaning process, a main brush, mopping cloth, and other cleaning structures of a cleaning robot are highly prone to be in contact with floor coverings, resulting in abnormal noises. In severe cases, this may cause cleaned debris to fall off with the vibration, adversely affecting a floor cleaning effect.

### SUMMARY OF THE INVENTION

The purpose of the present disclosure is to provide a method and apparatus for controlling a cleaning device, a computer-readable storage medium and an electronic device, so as to set a cleaning direction of the cleaning device according to an actual situation of a floor covering.

According to the detailed description of the present disclosure, in a first aspect, a method for controlling a cleaning device is provided by the present disclosure. The method includes: obtaining a laying direction of a floor covering, wherein the laying direction is a direction where the longest symmetry axis of the floor covering is located; determining a cleaning direction of a cleaning device based on the laying direction; and controlling the cleaning device to clean along the cleaning direction.

In an exemplary embodiment of the present disclosure, the determining the cleaning direction of the cleaning device based on the laying direction includes: when the laying direction is a single direction, setting the laying direction as the cleaning direction of the cleaning device, wherein the single direction refers to a plurality of laying directions of the floor covering being mutually parallel.

In an exemplary embodiment of the present disclosure, the determining the cleaning direction of the cleaning device based on the laying direction includes: when the laying direction includes two or more different directions, setting the cleaning direction as a long side direction of an area where the floor covering is located.

In an exemplary embodiment of the present disclosure, the obtaining the laying direction of the floor covering includes: identifying a covering type of the floor covering; determining whether to identify the laying direction of the floor covering based on the covering type; and after determining to identify the laying direction of the floor covering, identifying the laying direction of the floor covering.

In an exemplary embodiment of the present disclosure, the determining whether to identify the laying direction of the floor covering based on the covering type includes: not identifying the laying direction of the floor covering when the covering type is ceramic tiles or carpets; and identifying the laying direction of the floor covering when the covering type is flooring.

In an exemplary embodiment of the present disclosure, the method further includes: when the covering type is ceramic tiles or carpets, setting the cleaning direction as a long side direction of an area where the floor covering is located.

In an exemplary embodiment of the present disclosure, the determining whether to identify the laying direction of the floor covering based on the covering type includes: identifying the laying direction of the floor covering when the covering type is rectangular or rhombic.

In an exemplary embodiment of the present disclosure, the identifying the laying direction of the floor covering includes: acquiring a floor image corresponding to the floor covering; and processing the floor image to determine the laying direction of the floor covering.

In an exemplary embodiment of the present disclosure, the processing the floor image to determine the laying direction of the floor covering includes: extracting line information in the floor image; and determining the laying direction of the floor covering based on the line information.

In an exemplary embodiment of the present disclosure, the obtaining the laying direction of the floor covering includes: determining the laying direction of the floor covering according to a user setting.

In a second aspect, an apparatus for controlling a cleaning device is provided by the present disclosure. The apparatus includes: a laying direction determination module configured to obtain a laying direction of a floor covering, wherein the laying direction is a direction where the longest symmetry axis of the floor covering is located; a cleaning direction determination module configured to determine a cleaning direction of the cleaning device based on the laying direction; and a cleaning device control module configured to control the cleaning device to clean along the cleaning direction.

In a third aspect, a computer-readable storage medium storing a computer program is provided by the present disclosure, wherein the computer program, when executed by a processor, implements the above method for controlling the cleaning device.

In a fourth aspect, an electronic device is provided by the present disclosure. The electronic device includes a processor; and a memory configured to store executable instructions of the processor, wherein the processor is configured to execute the above method for controlling the cleaning device by executing the executable instructions.

According to the method for controlling the cleaning device provided by the exemplary embodiments of the present disclosure, the laying direction of the floor covering is obtained, and the cleaning direction of the cleaning device can be set based on the laying direction of the floor covering, so that the cleaning direction of the cleaning device is associated with the laying direction of the floor covering. In addition, since the laying direction is the direction where the longest symmetry axis of the floor covering is located, if the laying direction is set as the cleaning direction, the cleaning device cleans along the laying direction. Thus, the contact frequency of the cleaning device with covering joint seams in the cleaning process can be reduced, thereby reducing abnormal noises from a cleaning mechanism and falling of already cleaned debris, and improving a floor cleaning effect.

### BRIEF DESCRIPTION OF THE DRAWINGS

The accompanying drawings here are incorporated in the Description and constitute a part of the Description, show embodiments conforming to the present disclosure, and are used together with the Description to explain the principles of the present disclosure. Apparently, the accompanying drawings in the following description show only some embodiments of the present disclosure, and a person of ordinary skill in the art may still derive other drawings from these accompanying drawings without creative efforts. In the accompanying drawings:
FIG 1 shows a flowchart of a method for controlling a cleaning device provided by an exemplary embodiment of the present disclosure;
FIG 2 shows a schematic diagram of subareas of an area to be cleaned provided by an exemplary embodiment of the present disclosure;
FIG 3 shows a schematic diagram of a laying direction provided by an exemplary embodiment of the present disclosure;
FIG 4 shows a schematic diagram of another laying direction provided by an exemplary embodiment of the present disclosure;
FIG 5 shows a schematic diagram of line information extracted from a floor image of one subarea provided by an exemplary embodiment of the present disclosure;
FIG 6 shows a schematic diagram of line information extracted from another floor image of another subarea provided by an exemplary embodiment of the present disclosure;
FIG 7 shows a schematic diagram of a cleaning device that cleans along a laying direction of a covering provided by an exemplary embodiment of the present disclosure;
FIG 8 shows a path diagram of a cleaning device that cleans on a covering with a longitudinal laying direction provided by an exemplary embodiment of the present invention;
FIG 9 shows a path diagram of a cleaning device that cleans on a covering with a transverse laying direction provided by an exemplary embodiment of the present invention;
FIG 10 shows a schematic diagram of a user-side cleaning operation interface of a cleaning device provided by an exemplary embodiment of the present disclosure;
FIG 11 shows a schematic diagram of a cleaning direction setting interface at a user side in an exemplary embodiment of the present disclosure;
FIG 12 shows a flowchart of operation steps of a method for controlling a cleaning device provided by an exemplary embodiment of the present disclosure;
FIG 13 shows a block diagram of an apparatus for controlling a cleaning device according to an exemplary embodiment of the present disclosure; and
FIG 14 shows a schematic modular diagram of an electronic device according to an exemplary embodiment of the present disclosure.

### DETAILED DESCRIPTION

To make the objectives, technical solutions and advantages of the present disclosure clearer, the present disclosure will be further described in detail below with reference to the accompanying drawings. It is obvious that the described embodiments are only part but not all of the embodiments of the present disclosure. All other embodiments obtained by those of ordinary skill in the art without creative efforts based on the embodiments in the present disclosure are within the protection scope of the present disclosure.

The terms used in the embodiments of the present disclosure are for the purpose of describing particular embodiments only and are not intended to limit the present disclosure. The singular forms "a/an", "the" and "said" used in the embodiments of the present disclosure and the appended claims are intended to include the plural forms as well, unless the context clearly indicates otherwise. The term "a plurality of" generally means at least two.

It should be understood that the term "and/or" used herein merely describes an association relationship of associated objects, and indicates that there may be three relationships. For example, A and/or B may indicate three cases: A exists alone, A and B exist at the same time, and B exists alone. In addition, the character "/" herein generally indicates an "or" relationship between the contextual objects.

It should be understood that although terms such as "first", "second" and "third" may be used in the embodiments of the present disclosure to describe certain elements, and these elements should not be limited by these terms. These terms are only used to distinguish one described element from another. For example, without departing from the scope of the embodiments of the present disclosure, a "first" element may also be referred to as a "second" element, and similarly, a "second" element may be referred to as a "first" element.

Depending on the context, the word "if" as used herein may be interpreted as "when" or "in the event of" or "in response to determining" or "in response to detecting". Similarly, depending on the context, the phrases "if it is determined that" or "if it is detected that (the stated condition or event)" may be interpreted as "when it is determined that" or "in response to determining" or "when it is detected that (the stated condition or event)" or "in response to detecting (the stated condition or event)".

Furthermore, it should be noted that the terms "comprising", "including" or any variations thereof are intended to cover non-exclusive inclusion. This means that a product or apparatus including a series of elements not only includes those explicitly listed but may also encompass other unlisted elements or inherent elements of such a product or apparatus. Unless further limited, an element defined by the phrase "comprising/including a ..." does not preclude the existence of additional identical elements in the product or apparatus that includes said element.

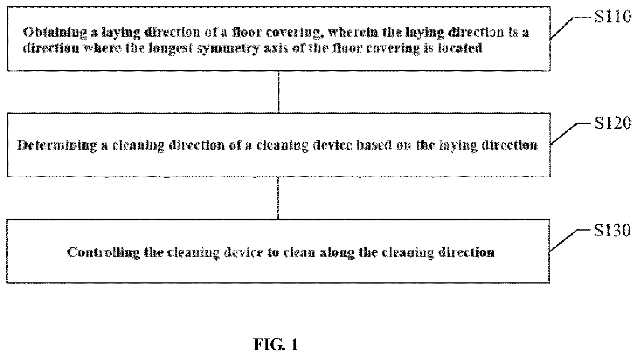

A method for controlling a cleaning device is provided by an exemplary embodiment of the present disclosure. The method is applicable to a cleaning robot which can implement the method through hardware and/or software. Referring to FIG 1, a flowchart of a method for controlling a cleaning device provided by an exemplary embodiment of the present disclosure is shown. The method for controlling the cleaning device may include the following steps S110, S120, and S130.

In S110, a laying direction of a floor covering is obtained, wherein the laying direction is a direction where the longest symmetry axis of the floor covering is located.

In S120, a cleaning direction of the cleaning device is determined based on the laying direction.

In S130, the cleaning device is controlled to clean along the cleaning direction.

According to the method for controlling the cleaning device provided by the exemplary embodiment of the present disclosure, the laying direction of the floor covering is obtained, and the cleaning direction of the cleaning device can be set based on the laying direction of the floor covering, so that the cleaning direction of the cleaning device is associated with the laying direction of the floor covering. In addition, since the laying direction is the direction where the longest symmetry axis of the floor covering is located, if the laying direction is set as the cleaning direction, the cleaning device cleans along the laying direction. Thus, the contact frequency of the cleaning device with covering joint seams in the cleaning process can be reduced, thereby reducing abnormal noises from a cleaning mechanism and falling of already cleaned debris, and improving a floor cleaning effect.

The following will enumerate the detailed description to elaborate each step of the method for controlling the cleaning device provided by the exemplary embodiment of the present disclosure.

In S110, a laying direction of a floor covering is obtained, wherein the laying direction is a direction where the longest symmetry axis of the floor covering is located.

Under normal conditions, in an actual sweeping operation process, the cleaning device divides an area to be cleaned into a plurality of different subareas, and then, cleans each subarea separately. Different subareas may have different sweeping directions in the sweeping process.

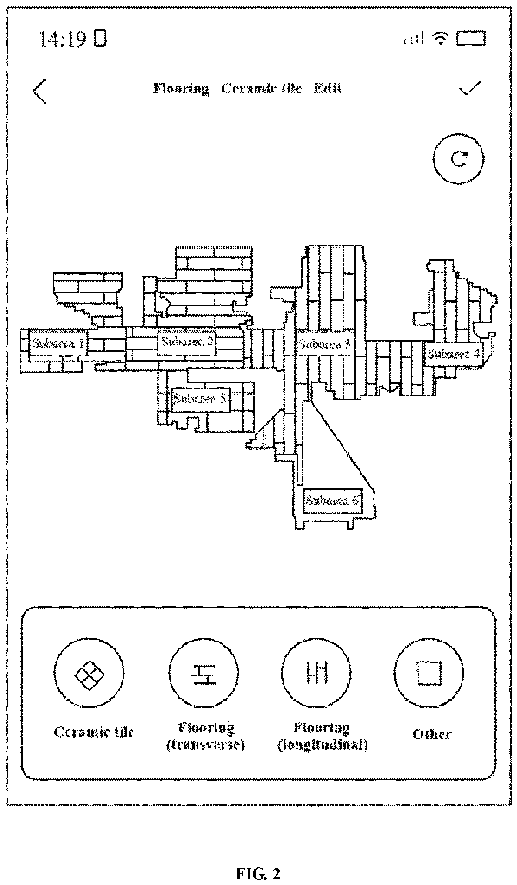

Referring to FIG 2, a schematic diagram of subareas of an area to be cleaned provided by an exemplary embodiment of the present disclosure is shown. In FIG 2, an entire area to be cleaned is divided into six subareas, namely subareas 1 to 6, and each subarea may be a room area.

In practical applications, the subareas of the area to be cleaned may be divided based on natural subareas of the area to be cleaned (for example, according to rooms of the entire area to be cleaned) or based on shapes of the subareas of the area to be cleaned (for example, a rectangular area is determined as a subarea, a triangular area as another subarea, and the like).

In an exemplary embodiment of the present disclosure, the area to be cleaned may also be divided based on a material of a floor covering. For example, in a region, an area where flooring is laid is determined as a subarea, an area where ceramic tiles are laid is determined as another subarea, and an area where carpets are laid is determined as another subarea. In other words, even within a single room, a plurality of divided subareas may be defined due to differences in materials of the floor coverings.

Particularly, in the process of dividing the area to be cleaned into subareas, the division may be performed in a room map already obtained by the cleaning device, and the division results are saved into the room map.

It should be noted that in the process of dividing the area to be cleaned into subareas, in addition to the above division methods, a user may also directly divide the area to be cleaned into subareas. Under normal conditions, the cleaning device may transmit the obtained room map to a user-side application (APP), and the user can access a subarea division editing page through the APP. In this editing page, the user can directly divide the displayed room map into subareas.

In the exemplary embodiment of the present disclosure, after the area to be cleaned is divided into subareas, a laying direction of the floor covering may be set for each subarea.

Particularly, in the process of setting the laying direction of the floor covering in each subarea, it is necessary to obtain the laying direction of the floor covering first (i.e., identifying the laying direction of the floor covering). In the exemplary embodiment of the present disclosure, in order to reduce identification processes for scenarios where identifying a laying direction of a floor covering is unnecessary, a preliminary judgment must be made to determine whether laying direction identification is required. Only when it is determined that laying direction identification in a subarea is feasible, can the laying direction of the floor covering corresponding to the subarea be identified. In other words, for subareas where laying direction identification are unnecessary or infeasible, the laying direction identification process may be skipped, thereby reducing unnecessary operation steps.

In the exemplary embodiment of the present disclosure, in order to determine whether it is necessary to identify the laying direction of the floor flooring in each subarea, the covering type of the floor flooring in each subarea may be identified first. The covering types may be categorized in various ways, and for example, may be ceramic tiles, carpets, flooring and the like based on the material types of the coverings, and may be rectangular, square, rhombus and the like based on the shape types of the coverings.

In practical applications, different methods may be used in the process of identifying the type of the covering in the subarea. For example, a deep learning-based image identification method may be used: first, an image of a covering in a subarea may be obtained; and then, the image is input into a pre-trained deep learning model for identification to determine the covering type. This deep learning-based model is a model pre-trained by training images; and this deep learning-based image identification method is primarily used to identify the material type of the covering, and typically can be used to identify the covering type as long as a single covering image within the subarea is obtained.

For the identification of the covering type of the floor covering, a specific sensor may also be used for identification. For example, a carpet sensor may be used for identification of carpets, etc. The exemplary embodiments of the present disclosure are not specifically limited to the particular covering type identification method.

For the identification of the shape type of the floor covering, the shape of a single covering area in a subarea may be obtained first. Typically, since a single covering area is difficult to obtain, an image of a larger area may be obtained. Then, line information in the image is extracted, and the shape of the single covering area can be determined directly based on the line information. In addition to the above two methods for identifying the covering type in the subarea, other covering type identification methods may be used in the present disclosure, which are not limited thereto.

According to different covering types, the exemplary embodiment of the present disclosure provides two different embodiments for determining whether a subarea requires identification of the laying direction of its covering.

### Embodiment 1

When the covering type is the material type of the floor covering, different determination results may be obtained based on different material types. Particularly, when the material type of the floor covering is ceramic tiles or carpets, that is, when the covering type is ceramic tiles or carpets, the laying direction of the floor covering is not identified; and when the material type of the floor covering is flooring, the laying direction of the floor covering is identified.

Embodiment 1 is applicable to a scenario where the shape of the ceramic tiles is typically square. After it is determined that the material type of the floor covering is the ceramic tiles, it is unnecessary to identify the laying direction of the floor covering in the subarea, thereby reducing subsequent unnecessary procedures.

### Embodiment 2

For a scenario where the ceramic tiles may also be rectangular or rhombic, the shape type of the floor covering may be identified directly without identifying the material type of the floor covering. Particularly, only when the shape type of the floor covering is rectangular or rhombic, that is, when the covering type is rectangular or rhombic, the laying direction of the floor covering is identified; and when the shape type of the floor covering is a square and other shapes, the laying direction of the floor covering is not identified.

In practical applications, either of the above two embodiments may be selected. Alternatively, the material type of the floor covering may be identified first, and then, the shape type identification is performed on the material type of ceramic tiles or flooring. Only when the shape type of the ceramic tiles or flooring is determined to be rectangular or rhombic, it is determined that the laying direction of the floor covering is required to be identified in this subarea.

After it is determined that the laying direction of the floor covering is required to be identified, the laying direction of the floor covering in the subarea can be identified.

In the exemplary embodiment of the present disclosure, in the process of identifying the laying direction of the floor covering, a floor image of a subarea may be acquired first, and then is processed to determine the laying direction of the floor covering.

Specifically, the timing for acquiring the floor image of the subarea may be in the process of establishing the room map or in the process of completing a complete sweeping cycle by the cleaning device. In addition, in the process of establishing the room map or sweeping, the cleaning device acquires floor images at different sampling points while simultaneously recording coordinate positions of the acquired floor images.

After the floor images are acquired, useful floor images among the acquired floor images may be processed, and images that are blank or low in confidence levels are discarded. Specifically, in the process of processing the floor image, line information in the floor image may be extracted first. There are many particular methods to extract the line information in the image, which are not reiterated herein.

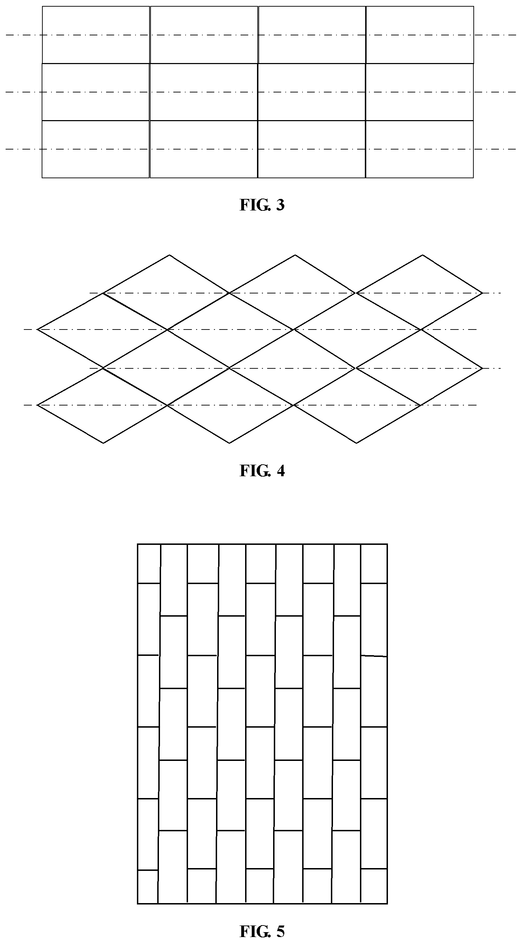

Then, the laying direction of the floor covering can be determined based on the extracted line information, specifically based on the distribution of lines in the line information. The laying direction of the floor covering is a direction where the longest symmetry axis of the floor covering is located. Referring to FIGs. 3 and 4, the corresponding laying directions when the shape types of floor coverings are rectangular and rhombic are shown respectively, and the extending directions shown by dashed lines in the figures are the laying directions of the floor coverings, which are also the directions where the longest symmetry axes of the rectangular and rhombic floor coverings are located.

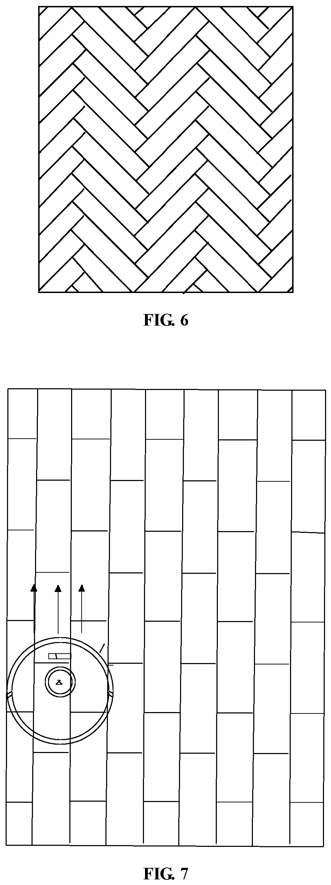

Referring to FIGs. 5 and 6, the line information extracted from the obtained floor images of different subareas are shown. Directions where the longest symmetry axes of the floor covering are located in FIG 5 are all consistent, that is, the laying directions are single, and the directions presented in the figure are longitudinally arranged. Thus, it can be determined that the laying direction of the covering in the corresponding subarea is longitudinal, and the determined results may be displayed in the subareas on the room map in FIG 2. For example, in FIG 2, the laying directions of the covering in subareas 3 and 4 are longitudinal, and the laying directions of the covering in subareas 1 and 2 are transverse.

In FIG 6, however, the determined directions where the longest symmetry axes of the floor covering are located are not consistent, which means that the laying directions of the floor covering are not single, that is, the laying directions of the floor covering are two or more different directions.

It should be noted that in practical applications, setting the laying direction of the covering in the subarea may also be user's manual setting of the laying direction in the subarea, namely, determining the laying direction of the floor covering according to a user setting. For example, as shown in FIG 2, in a "Floor Ceramic Tile Editing" module displayed in a user interface, the user may set the laying direction of the floor via buttons shown below, such as "Ceramic tile", "Flooring (transverse)", "Flooring (longitudinal)" and "Other". "Flooring (transverse)" refers to the flooring laid transversely, and "Flooring (longitudinal)" refers to the flooring laid longitudinally, both of which include the laying directions; and "Ceramic tile" and "Other" refer to no laying direction, as shown in subareas 5 and 6.

In S120, a cleaning direction of the cleaning device is determined based on the laying direction.

In the exemplary embodiment of the present disclosure, after the laying direction of the above floor covering is determined, the cleaning direction of the cleaning device can be set based on the laying direction.

Specifically, when the laying direction is a single direction, for example, as shown in FIG 5, the laying direction may be directly set as the cleaning direction of the cleaning device. In a subsequent cleaning process, the cleaning device can clean along the laying direction. In the cleaning process of the cleaning device along the laying direction of the floor covering, the times of interference between the cleaning device and covering joint seams can be reduced, the occurrence of abnormal noises can be minimized, and the falling of cleaned debris caused by scraping in the contact process can also be decreased, thereby improving the floor cleaning effect.

In the exemplary embodiment of the present disclosure, the above single direction means that the laying directions of the floor covering are mutually parallel. That is, the directions where the longest symmetry axes of the floor covering are located are consistent, namely, mutually parallel.

In practical applications, if the laying direction of the floor covering is not a single direction, that is, there are two or more different directions, as shown in FIG 6, the cleaning direction of the cleaning device may be set to a long side direction of the area where the floor covering is located, so as to reduce the number of turns of the cleaning device throughout the entire cleaning process.

In addition, when the covering type of the floor covering is ceramic tiles or carpets and the laying direction of the floor covering is not identified, the cleaning direction may be set as the long side direction of the area where the floor covering is located.

In S130, the cleaning device is controlled to clean along the cleaning direction.

In the exemplary embodiment of the present disclosure, after the cleaning direction of the cleaning device is determined, the cleaning device can be controlled to perform the cleaning task based on the cleaning direction. As shown in FIG 7, a schematic diagram of the cleaning device that cleans along the laying direction of the floor covering is shown. Such a cleaning method can reduce the times of interference between the cleaning device and covering joint seams, minimize the occurrence of abnormal noises, and also decrease the falling of cleaned debris caused by scraping in the contact process, thereby improving the floor cleaning effect.

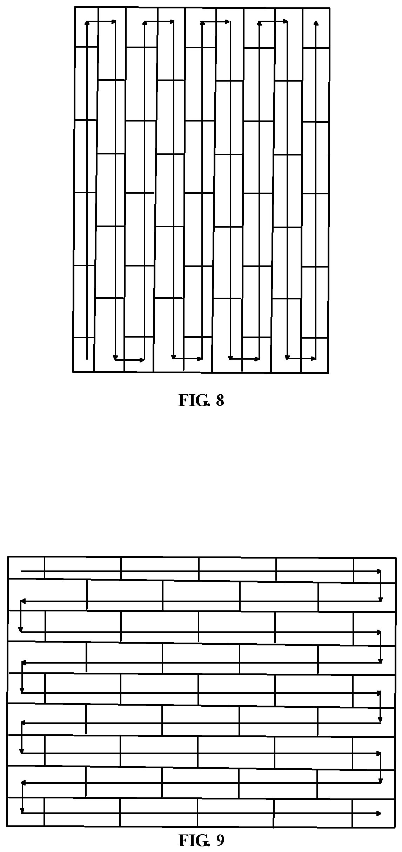

It should be noted that in the process that the cleaning device cleans along the laying direction, a zigzag cleaning pattern is still accessible, as shown in FIGs. 8 and 9. FIG. 8 shows a path diagram of the cleaning device that cleans on a covering with a longitudinal laying direction. FIG 9 shows a path diagram of the cleaning device that cleans on a covering with a transverse laying direction.

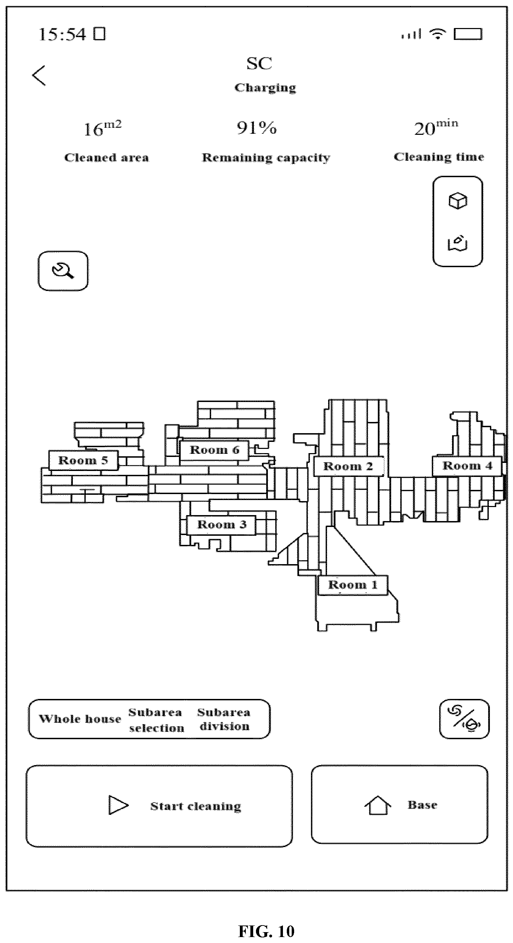

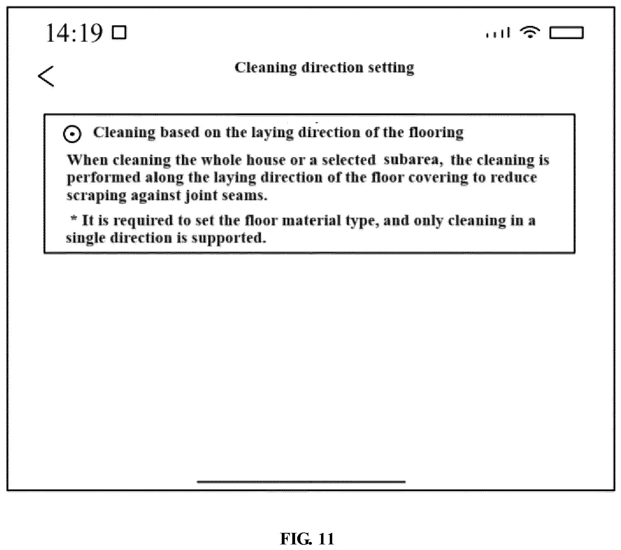

Referring to FIG 10, a schematic diagram of a user-side cleaning operation interface of the cleaning device is shown, in which the entire area (i.e., the whole house) is divided into subareas by rooms. The laying directions of the flooring are displayed in rooms 2 to 5. In other words, when any of the rooms 2 to 5 is selected for cleaning, the cleaning direction may be set, as shown in FIG 11. FIG 11 shows a schematic diagram of a cleaning direction setting interface at a user side in an exemplary embodiment of the present disclosure. If the user selects "cleaning based on the laying direction of the flooring", the cleaning device will clean the corresponding room based on the cleaning path shown in FIG 8 or 9 in the cleaning process.

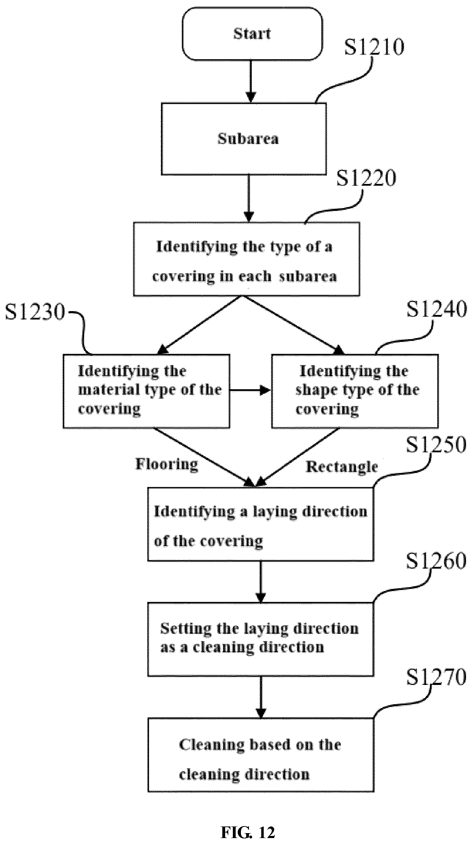

Referring to FIG 12, a flowchart of operation steps of a method for controlling a cleaning device provided by an exemplary embodiment of the present disclosure is shown. In FIG 12, S1210 is performed first to divide an area to be cleaned into subareas. Then, S1220 is performed to identify the type of a covering in each subarea. In the process of identifying the covering type in each subarea, S1230 may be performed to identify the material type of the covering, or S1240 may be performed to identify the shape type of the covering, or the shape type of the covering may be identified after the material type of the covering is identified, that is, S1230 is followed by S1240. When the material type of the covering is flooring or the shape type of the covering is rectangular, S1250 is performed to identify a laying direction of the covering. Then, S1260 is performed to set the laying direction as a cleaning direction. Finally, S1270 is performed to clean based on the cleaning direction.

In the method for controlling the cleaning device provided by the exemplary embodiment of the present disclosure, in the process of setting the cleaning direction of the cleaning device, the material type or shape type of the covering is identified first to determine whether to identify the laying direction of the subarea. Under normal conditions, only when the covering is flooring, rectangular or rhombus, the laying direction of the covering is identified, and the laying direction is not identified in other cases, so that unnecessary laying direction identification operations can be reduced. In addition, by setting the laying direction as the cleaning direction, the times of interference between the cleaning device and covering joint seams can be reduced, the occurrence of abnormal noises can be minimized, and the falling of cleaned debris caused by scraping in the contact process can also be decreased, thereby improving the floor cleaning effect.

It should be noted that although steps of the method provided by the present disclosure are described in the accompany drawings according to a particular order, it does not require or imply that these steps must be executed in accordance with the specific order or a desired result cannot be realized until all shown steps are executed. Additionally or alternatively, some steps may be omitted, multiple steps may be integrated into one step to be performed, and/or a step may be divided into multiple steps.

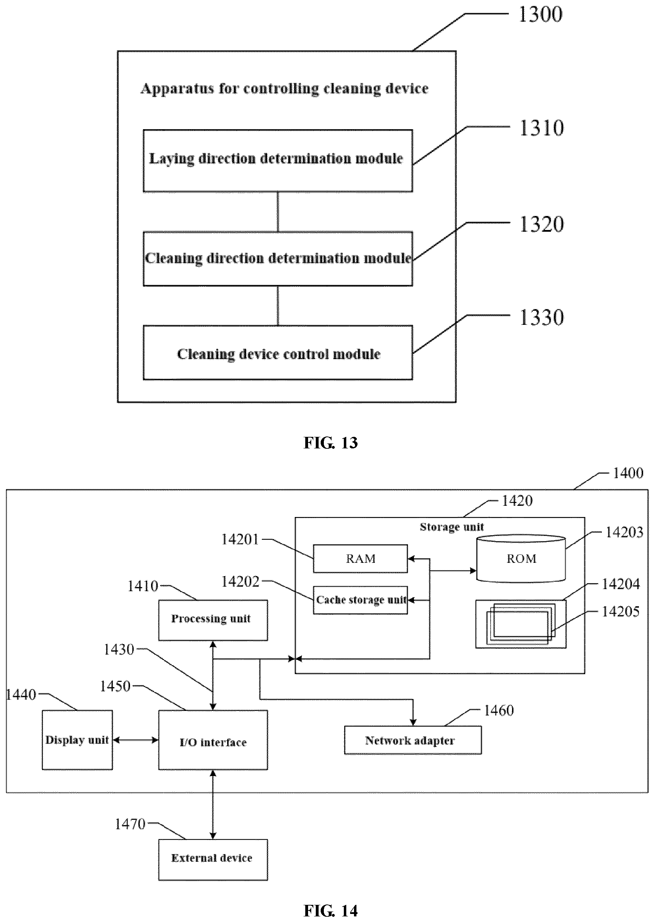

In an exemplary embodiment of the present disclosure, an apparatus for controlling a cleaning device is also provided. As shown in FIG 13, the apparatus 1300 for controlling the cleaning device may include a laying direction determination module 1310, a cleaning direction determination module 1320 and a cleaning device control module 1330.

The laying direction determination module 1310 is configured to obtain a laying direction of a floor covering, wherein the laying direction is a direction where the longest symmetry axis of the floor covering is located.

The cleaning direction determination module 1320 is configured to determine a cleaning direction of the cleaning device based on the laying direction.

The cleaning device control module 1330 is configured to control the cleaning device to clean along the cleaning direction.

In an exemplary embodiment of the present disclosure, the cleaning direction determination module 1320 is configured to set the laying direction as the cleaning direction of the cleaning device when the laying direction is a single direction, wherein the single direction refers to a plurality of laying directions of the floor covering being mutually parallel.

In an exemplary embodiment of the present disclosure, the cleaning direction determination module 1320 is configured to set the cleaning direction as a long side direction of an area where the floor covering is located when the laying direction includes two or more different directions.

In an exemplary embodiment of the present disclosure, the laying direction determination module 1310 is configured to identify a covering type of the floor covering; determine whether to identify the laying direction of the floor covering based on the covering type; and after determining to identify the laying direction of the floor covering, identify the laying direction of the floor covering.

In an exemplary embodiment of the present disclosure, the laying direction determination module 1310 is configured not to identify the laying direction of the floor covering when the covering type is ceramic tiles or carpets, and is configured to identify the laying direction of the floor covering when the covering type is flooring.

In an exemplary embodiment of the present disclosure, the cleaning direction determination module 1320 is configured to set the cleaning direction as a long side direction of an area where the floor covering is located when the covering type is ceramic tiles or carpets.

In an exemplary embodiment of the present disclosure, the laying direction determination module 1310 is configured to identify the laying direction of the floor covering when the covering type is rectangular or rhombic.

In an exemplary embodiment of the present disclosure, the laying direction determination module 1310 is configured to acquire a floor image corresponding to the floor covering, and process the floor image to determine the laying direction of the floor covering.

In an exemplary embodiment of the present disclosure, the laying direction determination module 1310 is configured to extract line information in the floor image, and determine the laying direction of the floor covering based on the line information.

In an exemplary embodiment of the present disclosure, the laying direction determination module 1310 is configured to determine the laying direction of the floor covering according to a user setting.

The specific details of the modules in the above cleaning device control apparatus have been thoroughly detailed in the corresponding cleaning device control method, and are therefore not reiterated herein.

It should be noted that although several modules or units of the device for action execution are mentioned in the above detailed description, this division is not mandatory. Actually, according to the embodiments of the present disclosure, the features and functions of two or more modules or units described above may be embodied in one module or unit. On the contrary, the feature and function of one module or unit described above can be further divided into multiple modules or units to be embodied.

In an exemplary embodiment of the present disclosure, an electronic device capable of implementing the above method is also provided. For example, the electronic device may be a cleaning device capable of implementing the above method.

Those skilled in the art can understand that various aspects of the present disclosure can be implemented as systems, methods or program products. Therefore, various aspects of the present disclosure can be implemented as hardware only, software (including firmware, microcode, etc.) only, or a combination of hardware and software, which can be collectively referred to as "circuit", "module" or "system" here.

An electronic device 1400 according to the embodiment of the present disclosure is described below with reference to FIG 14. The electronic device 1400 shown in FIG 14 is merely an example and should not impose any limitations on the functionality or scope of use of embodiments of the present disclosure.

As shown in FIG 14, the electronic device 1400 is represented in the form of a general-purpose computing device. Components of the electronic device 1400 may include, but are not limited to, at least one processing unit 1410 described above, at least one storage unit 1420 described above, a bus 1430 connecting different system components including the storage unit 1420 and the processing unit 1410, and a display unit 1440.

The storage unit 1420 stores program codes executable by the processing unit 1410, such that the processing unit 1410 performs the steps according to various exemplary embodiments of the present disclosure described in the above-mentioned "exemplary method" section of the Description. For example, the processing unit 1410 may perform S110 to S130 as shown in FIG 1. In S110, a laying direction of a floor covering is obtained, wherein the laying direction is a direction where the longest symmetry axis of the floor covering is located. In S120, a cleaning direction of a cleaning device is determined based on the laying direction. In S130, the cleaning device is controlled to clean along the cleaning direction.

The storage unit 1420 may include a readable medium in the form of a volatile storage unit, such as a random access memory (RAM) 14201 and/or a cache storage unit 14202, and may further include a read-only memory (ROM) 14203.

The storage unit 1420 may further include a program/utility 14204 with a set of (at least one) program modules 14205. Such program modules 14205 include, but are not limited to, an operating system, one or more application programs, other program modules and program data, and each or some combinations of these examples may include the implementation of a network environment.

The bus 1430 may represent one or more of several types of bus structures, including a memory cell bus or a memory cell controller, a peripheral bus, an accelerated graphics port, a processing unit, or a local bus using any of a variety of bus structures.

The electronic device 1400 may also communicate with at least one external device 1470 (such as a keyboard, a pointing device and a Bluetooth device), or may also communicate with at least one device that enable(s) a user to interact with the electronic device 1400, and/or communicate with any device (such as a router or a modem) that enables the electronic device 1400 to communicate with at least one other computing device. This communication may be performed via an input/output (I/O) interface 1450. In addition, the electronic device 1400 may also communicate with at least one network (for example, a local area network (LAN), a wide area network (WAN) and/or a public network, such as the Internet) via a network adapter 1460. As shown in the figure, the network adapter 1460 communicates with other modules of the electronic device 1400 via the bus 1430. It should be understood that although not shown in the figure, other hardware and/or software modules may be used in conjunction with the electronic device 1400, including but not limited to: microcode, device drivers, redundant processing units, external disk drive arrays, and RAID systems, tape drives, and data backup storage systems.

Through the descriptions of the above embodiments, it is easy for those skilled in the art to understand that the exemplary embodiments described herein can be implemented by software or a combination of software and necessary hardware. Therefore, the technical solution according to the embodiment of the present disclosure can be embodied in the form of a software product. The software product can be stored in a non-volatile storage medium (a CD-ROM, a USB flash drive, a mobile hard disk, etc.) or on the network, and includes several instructions to make a computing device (which may be a personal computer, a server, a terminal apparatus, a network device, or the like) execute the method according to the embodiment of the present disclosure.

In an exemplary embodiment of the present disclosure, there is further provided a computer-readable storage medium having stored thereon a program product capable of implementing the above-described method of the present Description. In some possible embodiments, aspects of the present disclosure may also be implemented in the form of a program product including program codes which, when the program product runs on a terminal device, cause the terminal device to execute the steps according to various exemplary embodiments of the present disclosure described in the above "exemplary method" section of the present Description.

A program product for implementing the above method according to an embodiment of the present disclosure may be in form of a portable compact disk read-only memory (CD-ROM) and include program codes, and may run on a terminal device such as a personal computer. However, the program product of the present disclosure is not limited thereto, and in this document, the readable storage medium may be any tangible medium which contains or stores a program, and the program may be used by or in combination with an instruction execution system, an apparatus, or a device.

The program product may be any combination of one or more readable media. The readable medium may be a readable signal medium or a readable storage medium. The readable storage medium may be, for example, but not limited to, an electrical, magnetic, optical, electromagnetic, infrared, or semiconductor system, apparatus or device, or any combination of the above. More specific examples (a non-exhaustive list) of the readable storage medium may include: an electrical connection with one or more wires, a portable disk, a hard disk, a random-access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

The computer-readable signal medium may include a data signal propagated in a baseband or as part of a carrier wave, and readable program codes are carried in the data signal. This propagated data signal may be in many forms, including but not limited to an electromagnetic signal, an optical signal, or any suitable combination of the above. The readable signal medium may also be any readable medium other than the readable storage medium, and the readable medium may send, propagate, or transmit the program for use by or in combination with an instruction execution system, apparatus, or device.

The program code contained on the readable medium may be transmitted by any suitable medium, including, but not limited to: wireless, wired lines, optical cables, RF, etc., or any suitable combination of the above.

The program code for executing the operations of the present disclosure may be written in one programming language or any combination of a plurality of programming languages. The above programming languages include object-oriented programming languages, such as Java and C++, and also include conventional procedural programming languages, such as "C" language or similar programming languages. The program codes may execute entirely on a user computing device, partly on a user device, as an independent software package, partly on the user computing device and partly on a remote computing device, or entirely on the remote computing device or a server. In the case of the remote computing device, the remote computing device may be connected to the user computing device through any type of network, including the local area network (LAN) or wide area network (WAN), or may be connected to an external computing device (for example, via the Internet using an internet service provider).

In addition, the above drawings are merely schematic illustrations of the processing included in the method according to the exemplary embodiment of the present disclosure, and are not for limiting purposes. It is easy to understand that the processing shown in the above figures do not indicate or limit the time sequence of these processing. In addition, it is also easy to understand that these processing can be performed synchronously or asynchronously in multiple modules, for example.

Other embodiments of the present disclosure will be apparent to those skilled in the art from consideration of the description and practice of the content disclosed herein. The present disclosure is intended to cover any variations, uses, or adaptations of the present disclosure following the general principles thereof and including common knowledge or commonly used technical measures which are not disclosed herein. The description and the embodiments are to be considered as exemplary only, with a true scope and spirit of the present disclosure indicated by the claims.

It should be appreciated that the present disclosure is not limited to the exact construction that has been described above and illustrated in the accompanying drawings, and that various modifications and changes can be made without departing from the scope of the present disclosure. It is intended that the scope of the present disclosure is only limited by the appended claims.

## Claims

1. A method for controlling a cleaning device, comprising:
obtaining a laying direction of a floor covering, wherein the laying direction is a direction where the longest symmetry axis of the floor covering is located;
determining a cleaning direction of the cleaning device based on the laying direction; and
controlling the cleaning device to clean along the cleaning direction.

2. The method according to claim 1, wherein the determining the cleaning direction of the cleaning device based on the laying direction comprises:
when the laying direction is a single direction, setting the laying direction as the cleaning direction of the cleaning device, wherein the single direction refers to a plurality of laying directions of the floor covering being mutually parallel.

3. The method according to claim 1 or 2, wherein the determining the cleaning direction of the cleaning device based on the laying direction comprises:
when the laying direction comprises two or more different directions, setting the cleaning direction as a long side direction of an area where the floor covering is located.

4. The method according to any one of claims 1 to 3, wherein the obtaining the laying direction of the floor covering comprises:
identifying a covering type of the floor covering;
determining whether to identify the laying direction of the floor covering based on the covering type; and
after determining to identify the laying direction of the floor covering, identifying the laying direction of the floor covering.

5. The method according to claim 4, wherein the determining whether to identify the laying direction of the floor covering based on the covering type comprises:
not identifying the laying direction of the floor covering when the covering type is ceramic tiles or carpets; and
identifying the laying direction of the floor covering when the covering type is flooring.

6. The method according to claim 5, further comprising:
when the covering type is ceramic tiles or carpets, setting the cleaning direction as a long side direction of an area where the floor covering is located.

7. The method according to any one of claims 4 to 6, wherein the determining whether to identify the laying direction of the floor covering based on the covering type comprises:
identifying the laying direction of the floor covering when the covering type is rectangular or rhombic.

8. The method according to any one of claims 4 to 8, wherein the identifying the laying direction of the floor covering comprises:
acquiring a floor image corresponding to the floor covering; and
processing the floor image to determine the laying direction of the floor covering.

9. The method according to claim 8, wherein the processing the floor image to determine the laying direction of the floor covering comprises:
extracting line information in the floor image; and
determining the laying direction of the floor covering based on the line information.

10. The method according to any one of claims 1 to 9, wherein the obtaining the laying direction of the floor covering comprises:
determining the laying direction of the floor covering according to a user setting.

11. An apparatus for controlling a cleaning device, comprising:
a laying direction determination module configured to obtain a laying direction of a floor covering, wherein the laying direction is a direction where the longest symmetry axis of the floor covering is located;
a cleaning direction determination module configured to determine a cleaning direction of the cleaning device based on the laying direction; and
a cleaning device control module configured to control the cleaning device to clean along the cleaning direction.

12. A computer-readable storage medium storing a computer program, which, when executed by a processor, implements the method for controlling the cleaning device according to any one of claims 1 to 10.

13. An electronic device, comprising:
a processor; and
a memory configured to store executable instructions of the processor,
wherein the processor is configured to execute the method for controlling the cleaning device according to any one of claims 1 to 10 by executing the executable instructions.
